# EUROPEAN PATENT SPECIFICATION

(11) **EP 2 055 015 B1**
(45) Date of publication and mention of the grant of the patent: **15.08.2012**
(21) Application number: 08766131.0
(22) Date of filing: 05.06.2008
(51) Int. Cl.: H04B 5/02, G06K 7/00, H04B 5/00, G06K 19/07

(54) **WIRELESS COMMUNICATION DEVICE**
DRAHTLOSE KOMMUNIKATIONSVORRICHTUNG
DISPOSITIF DE COMMUNICATION SANS FIL

(30) Priority: 08.06.2007 KR 20070056302; 14.08.2007 KR 20070081827; 20.08.2007 KR 20070083638
(43) Date of publication of application: 06.05.2009
(73) Proprietor: LG Innotek Co., Ltd, Seoul 100-714 (KR)
(72) Inventor: KIM, Nam Yun, Ansan Gyeonggi-do 426-857 (KR)
(74) Representative: Dreiss
(86) International application number: PCT/KR2008/003169
(87) International publication number: WO 2008/150122

(56) References cited:
- US-A1- 2002 017 981
- US-A1- 2004 203 478
- US-A1- 2005 231 367
- US-A1- 2006 252 398
- US-A1- 2007 041 476
- US-B1- 6 686 830

## Description

### Technical Field

Embodiments relate to a wireless communication device.

### Background Art

Ubiquitous network technology means technology allowing a natural access to various networks without limitation in time and space. Examples of the ubiquitous network technology comprise RFID technology.

Generally, the RFID technology comprises a tag device and a reader device. The tag device is attached on an object such as goods to record detail information of the object. The reader device performs RF communication with the tag device to obtain the information of the object from the tag device. This RFID technology provides an infrastructure on which distribution/circulation management such as distribution, assembly, price change, and selling can be efficiently processed.

The patent US 6,686,830 B1 discloses a homodyne I/Q transceiver for use in RFID and similar applications.

### Disclosure of Invention

### Technical Problem

The problem is solved by the feature of the apparatus of claim 1.

Embodiments provide a wireless communication device that can analyze a change in a communication environment with a tag device using a reception state of at least one of received baseband I signal and Q signal, and change a channel frequency transmitted to the tag device.

Embodiments provide a wireless communication device that can control the frequency and the phase of a transmission channel in the case where the state of a signal received from a tag device is unstable.

Embodiments provide a wireless communication device that can minimize crosstalk between channels generated in wireless short distance communication and stably communicate according to a tag recognition distance by changing the frequency of a transmission channel.

Embodiments provide a wireless communication device that can improve tag energy supply and a tag recognition rate.

Embodiments provide a wireless communication device that can easily recover a signal of a tag device by amplifying a baseband signal received from a tag device to a predetermined level and cutting the signal to process the signal in the form of positive and negative square wave signals.

Embodiments provide a wireless communication device that can stably recover a reception signal even when the phase and the energy transfer position of a tag device change.

Embodiments provide a wireless communication device that can improve the sensitivity and signal-to-noise ratio (SNR) of a signal modulated using amplitude shift keying (ASK), and minimize influences of a DC offset and a crosstalk signal.

Embodiments provide a wireless communication device that can swiftly supply energy to a tag device and improve the recognition rate of the tag device by separating a tag device operation section and a reader device operation section to perform coding and then summing again.

### Technical Solution

The problem is solved by the features of the apparatus of claim 1.

An embodiment provides a wireless communication device comprising: a reception signal processor demodulating a received signal; a first signal state detector detecting a reception state of a first signal from the received signal; a second signal state detector detecting a reception state of a second signal from the received signal; a transmission signal processor modulating a transmission signal; and a controller controlling a change of a frequency of a channel transmitted to the transmission signal processor depending on a reception state of at least one of the first signal of the first signal state detector and the second signal of the second signal state detector.

An example provides a wireless communication device comprising: a mixer converting a received signal into a baseband first signal and a baseband second signal; a plurality of first signal processors sequentially amplifying the baseband first signal and cutting the signal to a predetermined level to output a positive square wave; a plurality of second signal processors sequentially amplifying the baseband second signal and cutting the signal to a predetermined level to output a negative square wave; a summer summing the positive and negative square wave signals output from the plurality of first signal processors and second signal processors to output corresponding digital signals; and a controller recognizing the digital signals of the summer as reception information.

An example provides a wireless communication device comprising: a first mixer mixing a signal corresponding to an operation section of a tag device with a first local frequency signal to output an energy signal; a second mixer mixing a signal corresponding to an operation section of a reader device with a second local frequency signal to output a data signal; and a synthesizer synthesizing the energy signal of the first mixer and the data signal of the second mixer to output a reader device signal.

### Advantageous Effects

Embodiments can reduce crosstalk between channels.

Embodiments can improve a signal recognition distance with a tag device and a tag signal recognition rate.

Embodiments can improve a degree of freedom in arrangement of a reader device.

Embodiments can prevent a non-linear crosstalk signal by a peak-to-average power ratio (PAR).

Embodiments can prevent an increase in an SNR.

Embodiments can prevent reception sensitivity and an SNR from reducing in the case where a tag device uses an ASK modulation method, and recover a digital signal to a sufficient voltage level.

Embodiments can improve an amplification gain without distortion of a signal received from a tag device to perform stable RFID communication.

Embodiments can minimize an influence of a DC offset through sequential amplification and cutting of a received tag signal.

Embodiments can minimize generation of a fading phenomenon.

Embodiments can exclude an influence of a crosstalk signal caused by a change in the phase of a received signal.

Embodiments can swiftly supply energy to a tag device.

### Brief Description of the Drawings

Fig. 1 is a construction view of a wireless communication system according to a first embodiment.

Fig. 2 is a construction view of the reader device of Fig. 1.

Fig. 3 is a construction view of the reception signal power controller of Fig. 2.

Fig. 4 is a construction view of a reception signal processor of Fig. 2.

Fig. 5 is a construction view of the I signal state detector and the Q signal state detector of Fig. 2.

Fig. 6 is a construction view of the first controller of Fig. 2.

Fig. 7 is a construction view of the transmission signal processor of Fig. 2.

Fig. 8 is a graph illustrating the states of I and Q signals according to the first embodiment.

Fig. 9 is a view illustrating a signal state in which the states of the I and Q signals of Fig. 8 have been compensated for.

Fig. 10 is a view of a wireless communication device in a wireless communication system according to a first example

Fig. 11 is a construction view of the I signal processor of Fig. 10.

Fig. 12 is a view of a signal waveform processed by the detector of Fig. 11.

Fig. 13 is a view of a signal waveform processed by the limiter of Fig. 11.

Fig. 14 is a view of a signal waveform output by the first summer of Fig. 11.

Fig. 15 is a view of a wireless communication device according to a third embodiment.

Fig. 16 is a view illustrating a timing standard of an electronic product code standard applied to the reader device of Fig. 15.

### Best Mode for Carrying Out the Invention

Hereinafter, embodiments will be described with reference to the accompanying drawings.

(First embodiment)

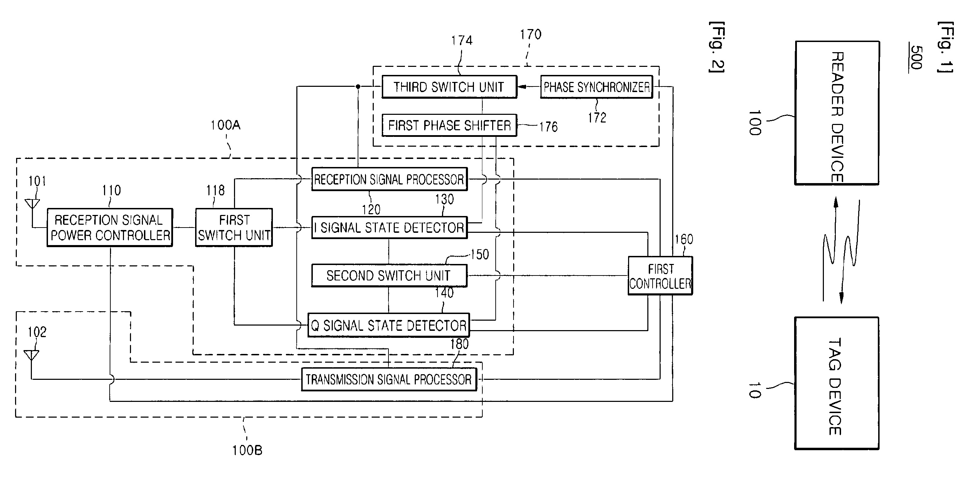

Fig. 1 is a construction view of a wireless communication system according to a first embodiment.

Referring to Fig. 1, the wireless communication system 500 is a system communicating with an individual object using a frequency. For example, the wireless communication system can comprise one of an RFID type, a near field communication (NFC) type, a Bluetooth type, a Zigbee type, an ultra-wide band (UWB) type, a wireless local area network (LAN), a Wibree, a Z-wave, and a dedicated short range communication (DSRC) type. The RFID type is described for example for convenience in description.

The wireless communication system 500 is designed for communication between wireless communication devices, and comprises a tag (or transponder) device 10 and a reader (or interrogator) device 100, for example.

The reader device 100 communicates with the tag device 10 using wireless short distance communication to collect information of at least one tag device 10. For example, the reader device 100 can collect the information of the tag device 10 by transmitting an information request signal to the tag device 10, and receiving object detailed information from the tag device 10. The reader device 100 transmits/receives the collected information to/from a middle ware or other nodes.

The tag device 10 has various shapes and sizes, and is classified into an active tag and a passive tag depending on whether power is supplied, classified into a low frequency system and a high frequency system depending on a frequency in use. The tag device 10 is attached to persons, automobiles, goods, livestock, and buildings, and contains detailed information of a corresponding object. Also, the tag device 10 can operate in cooperation with a device such as an electronic card to perform user authentication and electronic payment. The tag device 10 can be directly attached or function in cooperation with another device to provide various services.

The RF frequency tag of the RFID system 300 can be classified into a low frequency (LF) tag of 124-134 kHz used for access control and animal management, a high frequency (HF) tag of 13.56 MHz used for an integrated circuit (IC) card and an identification card, an ultra HF (UHF) tag of 400-915 MHz used for identification of containers in distribution and circulation, and a microwave tag of 2.45 GHz. Also, a 5.8 GHz tag can be used for telematics. These communication bands are provided for an exemplary purpose, and can change within the technical scope of the embodiments, as defined by the appended claims

The reader device 100 should efficiently receive the information of the tag device 10 even when a communication environment changes as the tag device 10 moves.

Fig. 2 is a view of the reader device of Fig. 1.

Referring to Fig. 2, the reader device 100 comprises a first reception circuit 100A, a first transmission circuit 100B, a first controller 160, and a frequency control circuit 170. Here, the reader device 100 is a terminology for explaining an embodiment. The function and the elements of the reader device 100 can be applied to the tag device, and is not limited to the reader device.

The first reception circuit 100A demodulates a signal received from the tag device, converts the signal into a digital signal. The first transmission circuit 100B transmits a tag information request signal, for example, as a reader signal.

The frequency control circuit 170 outputs a local frequency to demodulate a signal received to the first reception circuit 100A, and outputs a local frequency to modulate a signal transmitted to the first transmission circuit 100B. Here, the local frequencies supplied to the reception circuit 100A and the transmission circuit 100B can be the same or different from each other.

The first controller 160 transmits the tag information request signal, and collects and stores tag information from a received signal. Also, the first controller 160 can communicate with another reader device or a host computer, detects a change of a communication environment using a signal state received from the tag device, and adaptively controls the frequency of a transmission channel.

Specifically, the first reception circuit 100A comprises a reception antenna 101, a reception signal power controller 110, a first switch unit 118, a reception signal processor 120, an I signal state detector 130, a Q signal state detector 140, and a second switch unit 150.

The reception signal power controller 110 controls the power of a signal received from the reception antenna 101 in response to a control signal from the first controller 160. The output of the reception signal power controller 110 is output through the first switch unit 118. That is, the reception signal power controller 110 controls the power gain of a signal received to the antenna 101, thereby prevents a received signal from being saturated due to influences of a crosstalk signal, an antenna gain, and an amplification gain of an internal circuit.

The first switch unit 118 divides a received signal and outputs the divided signals to the reception signal processor 120, the I signal state detector 130, and the Q signal state detector 140. The first switch unit 118 can be a divider, a circulator, or a 3-way divider circuit.

The reception signal processor 120 demodulates a received signal, converts the signal into a digital signal, and delivers the digital signal to the first controller 160.

The I signal state detector 130 detects the reception state of a signal having an I phase (In-phase) (referred to as an I signal hereinafter) from received signals to output the same to the first controller 160. The Q signal state detector 140 detects the reception state of a signal having a Q phase (Quadrature-phase) (referred to as a Q signal hereinafter) from received signals to output the same to the first controller 160. Here, the I signal state detector 130 and the Q signal state detector 140 control a signal level in response to a control signal from the first controller 160.

The second switch unit 150 selectively delivers the output signals of the I signal state detector 130 and the Q signal state detector 140 to the first controller 160. The second switch unit 150 can be a divider, a circulator, or a 2-way divider circuit.

The first controller 160 generates analysis information using the reception state of at least one of the I signal state detector 130 and the Q signal state detector 140. That is, the first controller 160 detects a change in a communication environment with the tag device using an I signal state and/or a Q signal state, and changes a channel frequency when the communication environment changes. Here, the frequency of another channel can be changed by reassigning the frequency of a first channel, for example.

The frequency control circuit 170 can control a local frequency in response to a control signal from the first controller 160. The frequency control circuit 170 comprises a phase synchronizer 172, a third switch unit 174, and a first phase shifter 176. The internal elements of the frequency control circuit 170 are grouped for convenience in description, and not limited thereto but can change.

The phase synchronizer 172 can comprise a phase-locked-loop (PLL) unit (not shown) and a voltage oscillator (not shown). The PPL unit generates a reference signal in response to a control signal from the first controller 160, and the voltage oscillator generates a local frequency using the reference signal.

The third switch unit 174 can output the local frequency in at least two paths. The third switch unit 174 receives a local frequency from the phase synchronizer 172 to selectively divide the same. For example, the local frequency is delivered to the I signal state detector 130 and the Q signal state detector 140 through the reception signal processor 120, the transmission signal processor 180, and the first phase shifter 176.

The first phase shifter 176 outputs local frequencies as an I phase signal and a Q phase signal to the I signal state detector 130 and the Q signal state detector 140.

The first transmission circuit 100B comprises the transmission signal processor 180 and a transmission antenna 102. The transmission signal processor 180 modulates a transmission signal output from the first controller 160 to output the same to the transmission antenna 102.

Here, the reception antenna 101 and the transmission antenna 102 can be formed independently. Also, one of the antennas can be provided in a plurality of elements, and there is no limit in the characteristic or the number of the antenna.

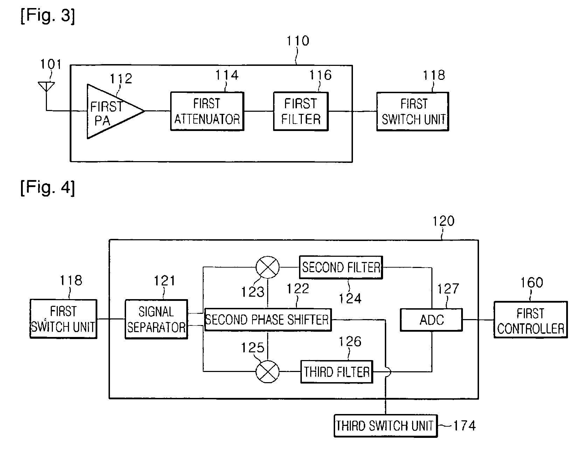

Fig. 3 is a construction view of the reception signal power controller of Fig. 2.

Referring to Fig. 3, the reception signal power controller 110 comprise a first amplifier 112, a first attenuator 114, and a first filter 116. When the power of a received signal is less than reference power, the first amplifier 112 amplifies the power of the received signal. When the power of a received signal is greater than a predetermined level, the first attenuator 114 can attenuate the received signal, or amplify the power of a low-controlled signal to output the same.

The first controller 160 can control the gain of the first amplifier 112 and the first attenuator 114 using the reception state of a received I signal and the reception state of a received Q signal.

Fig. 4 is a view of a reception signal processor of Fig. 2.

Referring to Fig. 4, the reception signal processor 120 comprises: a signal separator 121, a second phase shifter 122, a first mixer 123, a second filter 124, a second mixer 125, a third filter 126, and an analog-to-digital converter (ADC) 127.

The signal separator 121 can separate a signal divided by the first switch unit 118 into an RF I signal and an RF Q signal to output the same, or separate the signal into two RF signals having the same power.

The first mixer 123 mixes an RF I signal from the signal separator 121 with a first local frequency shifted by the second phase shifter 122 to convert the signal into a baseband I signal.

The second mixer 125 mixes an RF Q signal from the signal separator 121 with a second local frequency shifted by the second phase shifter 122 to convert the signal into a baseband Q signal. Here, the second phase shifter 122 receives a local frequency from the third switch unit 174 to output a first local frequency having a phase of 0° and a second local frequency having a phase of 90°.

A signal output to the first mixer 123 can be output as I+ and I- signals in a baseband. A signal output to the second mixer 125 can be output as Q+ and Q- signals in the baseband.

The second filter 124 removes a noise comprised in a baseband I signal output from the first mixer 123, and the third filter 126 removes a noise comprised in a baseband Q signal output from the second mixer 125.

The ADC 127 converts the baseband I signal and the baseband Q signal into a digital I signal and a digital Q signal to output them to the first controller 160. The first controller 170 can analyze a tag signal using at least one of the digital I signal and the digital Q signal. Here, at least one ADC 127 is disposed to selectively convert a baseband I signal and a baseband Q signal into a digital signal to output the same. Also, the ADC 127 can be comprised in the first controller 160 and is not limited thereto.

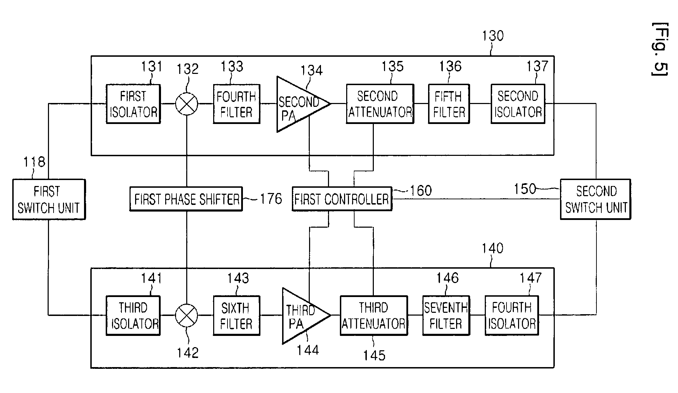

Fig. 5 is a view of the I signal state detector and the Q signal state detector of Fig. 2.

Referring to Fig. 5, the first I signal state detector 130 comprises a first isolator 131, a first mixer 132, a fourth filter 133, a second amplifier 134, a second attenuator 135, a fifth filter 136, and a second isolator 137. The Q signal state detector 140 comprises a third isolator 141, a fifth mixer 142, a sixth filter 143, a third amplifier 144, a third attenuator 145, a seventh filter 146, and a fourth isolator 147.

The first isolator 131 of the I signal state detector 130 and the third isolator 141 of the Q signal state detector 140 block a reflected wave signal introduced through the first switch unit 118.

The third mixer 132 mixes a received signal output from the first isolator 131 with a third local frequency output from the first phase shifter 176 to output a baseband I signal.

The fourth mixer 142 mixes a received signal output from the third isolator 141 with a fourth local frequency output from the first phase shifter 176 to output a baseband Q signal.

Here, the first phase shifter 176 receives a local frequency to output a third local frequency having a phase of 0°and a fourth local frequency having a phase of 90°. That is, the first phase shifter 176 can delay the phase of one of the local frequencies and output the same.

The fourth filter 133 removes a noise introduced during a mixing operation of the third mixer 132 from a baseband I signal. The second amplifier 134 amplifies the baseband I signal to a predetermined level, and the second attenuator 135 attenuates the baseband I signal to a predetermined level.

The fifth filter 136 removes a noise mixed in a baseband I signal. That is, the fifth filter 136 removes a noise comprised in a baseband I signal during an amplification and/or attenuation operation.

The second isolator 137 delivers a baseband I signal that has passed through the fifth filter 136 to the second switch unit 150 and prevents a reflected wave from being introduced. Here, the first controller 160 controls the power of a baseband I signal amplified and/or attenuated by the first amplifier 134 and the second attenuator 135.

Meanwhile, the sixth filter 143 removes the noise of a baseband Q signal output from the fourth mixer 142. The baseband Q signal is amplified to a predetermined level by third amplifier 144 or attenuated to a predetermined level by the third attenuator 145.

Also, the seventh filter 146 removes a noise comprised in a baseband Q signal during an amplification and/or attenuation operation. The fourth isolator 147 delivers the baseband Q signal to the first controller 160 through the second switch unit 150, and prevents a reflected wave from being introduced. Here, the first controller 160 controls the power of a baseband Q signal amplified and/or attenuated by the third amplifier 144 and the third attenuator 145.

Since the I signal state detector 130 and the Q signal state detector 140 can be described using the same elements with difference in a phase of a signal, detailed descriptions of the elements of the Q signal state detector 140 are omitted.

The I signal state detector 130 and the Q signal state detector 140 can control the gains of a baseband I signal and a baseband Q signal under control of the first controller 160.

A baseband I signal and a baseband Q signal of the I signal state detector 130 and the Q signal state detector 140 are delivered to the second switch unit 150. The second switch unit 150 selectively switches the baseband I signal and the baseband Q signal to deliver to the first controller 160.

The first controller 160 can judge whether a communication environment changes using the reception states of the input I signal and Q signal. That is, the controller 160 judges whether to reassign a channel frequency according to a difference in the phase or the power level of a current channel using the states of the I signal and the Q signal to perform control. Also, when the phase or the power level of the channel is unstable, the first controller 160 reassigns a channel frequency. At this point, the channel is reassigned by shifting the frequency of a first channel or a start channel by a predetermined frequency.

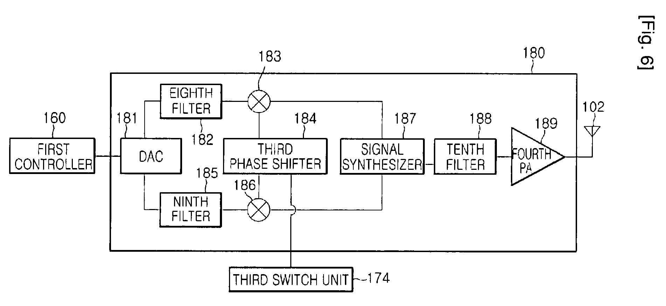

Fig. 6 is a construction view of the first controller of Fig. 2.

Referring to Fig. 6, the first controller 160 comprises a channel multiplexing module 161, a phase-locked loop control module 162, a phase control module 163, a reception state analysis module 164, and a reception sensitivity control module 165.

The first controller 160 detects a communication environment state with the tag device, for example, a recognition distance to the tag device, a phase change, a difference in the gains of I/Q signals, a difference in the power of I/Q signals according to the reception state of the I signal and/or the Q signal, and controls a frequency assigned to each channel using detected information.

The reception state analysis module 164 analyzes the reception state of the I signal and/or the Q signal input through the second switch unit 150 to generate analysis information by a communication environment change. Here, the analysis information comprises at least one of the voltage level, power, phase of the received signal, a recognition distance to the tag device, and a crosstalk between channel signals.

For example, in the case where a recognition distance to the tag device changes, first, a change is generated to a phase at a point at which a received signal arrives at the antenna, and second, in the case where there is a difference in the gain between an I signal a Q signal according to a frequency, a power difference between channels can be generated during an amplification operation. In this case, at least one of the I signal and the Q signal cannot be recovered. Also, the change in the recognition distance to the tag device is generated by a difference a phase difference and a phase difference and a difference in a synchronization time and remarkably reduces a signal recovery rate.

Also, the reception state analysis module 164 has a standard table according to the signal reception state, and generates the analysis information with reference to the standard table. At this point, the reception state analysis module 164 converts a signal format to analyze a signal, and processes a filtering operation to extract necessary information.

When the I signal state and/or the Q signal state analyzed by the reception state analysis module 164 is unstable, the reception state analysis module 164 delivers control information to the reception sensitivity control module 165, the phase control module 163, and the channel multiplexing module 161.

The channel multiplexing module 161 codes N channels necessary for a communication frequency band. Here, the channel multiplexing module 161 changes a first channel frequency or a specific channel frequency to newly assign all channels using the control information of the reception state analysis module 164.

Here, the frequency of each channel can be changed within an RFID frequency band. In the case where the RFID band is 900 MHz, the frequency of a multiplexed channel can be changed within the range of about 910-914 MHz. For example, in a channel before change, the frequency of the first channel is 910.8 MHz, and a channel interval is 200 KHz, so that sixteen channels can be assigned. The channel interval is assigned according to domestic/international standards. Also, the frequency of a changed first channel is 910.9 MHz in case of being moved by 100 KHz, for example. The frequency of a second channel can be 911.1 MHz. In this manner, sixteen channels can be reassigned. Here, the frequency of the first channel can be changed at random or by a predetermined interval.

Also, when the frequency of the first channel or a specific channel is changed by a random frequency within the RFID band, a set of changed channels can be changed in tens of sets to hundreds of sets. The multiplexed channel can have a transmission speed of 40 Kbps to 640 Kbps. Also, as the number of channels increases, reduction in a recognition rate is solved and a difference in a gain by a wavelength can be remarkably reduced.

When a channel is multiplexed by the channel multiplexing module 161, the PLL control module 162 delivers a control signal commanding a change of a local frequency to the phase synchronizer 172. The phase synchronizer 172 generates a local frequency corresponding to a new channel to output the same. Here, the changed local frequency is delivered to respective parts, for example, the I signal state detector 130, the Q signal state detector 140, the reception signal processor 120, and the transmission signal processor 180 illustrated in Fig. 1.

The phase control module 163 generates phase control information for compensating for the states of an I signal and a Q signal using the control information of the reception state analysis module 164, and outputs the generated phase control information to a digital-to-analog converter (DAC) 181 of the transmission signal processor 180. Here, the DAC 181 controls the voltage level of a transmission signal to control the phase of the transmission signal. That is, the DAC 181 controls the phase of the transmission signal to synchronize the phases of an I signal and a Q signal.

The reception sensitivity control module 165 compares the power of the I signal and/ or the Q signal with a reference level using the control information of the reception state analysis module 164, and controls the amplification degree and/or the attenuation degree of the I signal and/or the Q signal. That is, the reception sensitivity control module 165 delivers a control signal to the I signal state detector 130 and the Q signal detector 140 to control the second amplifier 134 (of Fig. 5) and the second attenuator 135 (of Fig. 5) of the I signal state detector 130, and the third amplifier 144 (of Fig. 5) and the third attenuator 145 (of Fig. 5) of the Q signal state detector 140.

The first controller 160 reassigns a channel frequency depending on the state of a received signal to generate the state information of a new received signal through the above process when the reader signal is transmitted using a phase synchronized channel and a signal is received from the tag device. At this point, the first controller 160 generates information analyzing and interpreting the state of a new signal.

Also, since the first controller 160 measures and analyzes an RFID signal precisely for each channel, the first controller 160 can selectively store a channel having a high signal recovery rate from multiplexed channels, use the information of the stored channel, and swiftly supply energy to the tag device.

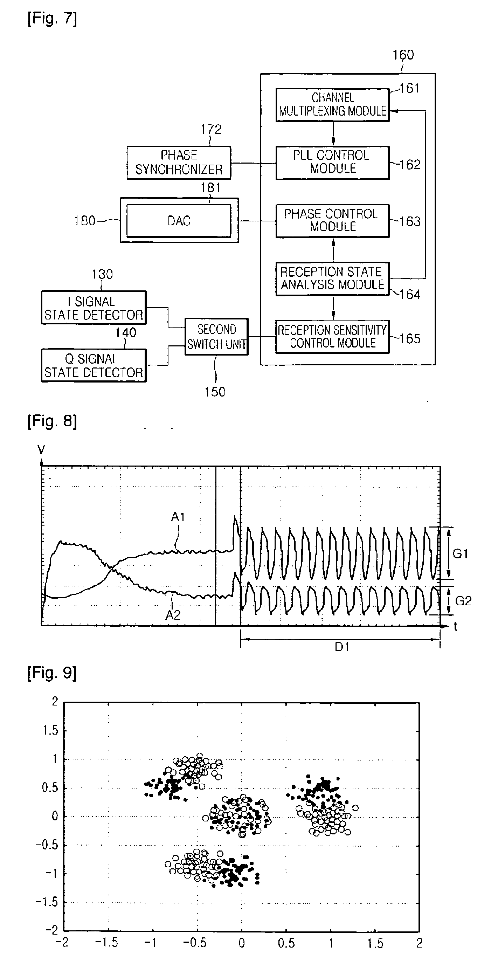

Fig. 7 is a construction view of the transmission signal processor of Fig. 2.

Referring to Fig. 7, the transmission signal processor 180 comprises the DAC 181, an eighth filter 182, a fifth mixer 183, a third phase shifter 184, a ninth filter 185, a sixth mixer 186, a signal synthesizer 187, a tenth filter 188, and a fourth amplifier 189.

The DAC 181 converts a digital signal delivered from the first controller 160 into a baseband signal, which is an analog signal. The eighth filter 182 and the ninth filter 185 filter a signals of channel bandwidth from the baseband signals. The fifth mixer 183 converts the baseband signals into RF I signals using a fifth local frequency output from the third phase shifter 184. The sixth mixer 186 converts the baseband signals into RF Q signals using the sixth local frequency shifted by the third phase shifter 184.

Here, the first controller 160 controls the phase of a digital signal delivered to the DAC 181 using the phase control information to output the same. At this point, the phases of an I signal and a Q signal can be synchronized and output. The DAC 181 controls a voltage level using the phase control information to convert a transmission signal into a baseband signal. Therefore, the phases of the I signal and the Q signal of the baseband signal can be synchronized, and a voltage between the two signals, and a gain is not saturated to one side but uniformly processed.

The eighth filter 182 and the ninth filter 185 pass baseband signals delivered from the DAC 181 according to channel bandwidths, respectively. The signals that have passed through the filters 182 and 185 are delivered to the fifth mixer 183 and the sixth mixer 186, respectively. The third phase shifter 184 outputs a fifth local frequency having a phase of 0°delivered from the third switch unit 174 to the fifth mixer 183, and outputs a sixth local frequency having a phase of 90°to the sixth mixer 186.

The fifth mixer 183 mixes the fifth local frequency with a baseband signal to generate an RF I signal. The sixth mixer 186 mixes the sixth local frequency with a baseband signal to generate an RF Q signal.

At this point, the modulation formats of the RF I signal and the RF Q signal can be a pulse-interval encoding (PIE) format according to an UHF RFID protocol such as ISO 18000-A, ISO 18000-B, Electronic Product Code (EPC) Generation-0, EPC Generation-1, and EPC Generation-2. As the modulation standards are applied, all of Double SideBand-Amplitude Shift Keying (DSB-ASK), Single SideBand-Amplitude Shift Keying (SSB-ASK), and Phase Reversal-Amplitude Shift Keying (PR-ASK) can be used.

The signal synthesizer 187 synthesizes an RF I signal and the RF Q signal into a single RF signal, and the tenth filter 188 removes a noise component generated during the synthesis operation.

An RF signal filtered by the tenth filter 188 is amplified to a power level that allows transmission by the fourth amplifier 189, and transmitted through the transmission antenna 102. Here, the fourth amplifier 189 can be realized using a power amplifier.

At this point, since the reader device transmits signals through a multiplexed channel using a changed frequency, crosstalk between channels with another device can be excluded, and a recognition distance to the tag device, a reception sensitivity, and a recognition rate can be improved. Also, a degree of freedom in disposing the reader device can be secured. Also, since the frequency interval of the multiplexed channel can be maintained constant, a non-linear crosstalk signal due to PAR, reduction in reception sensitivity, and increase in a signal-to-noise ratio (SNR) can be prevented.

Fig. 8 is a graph illustrating the states of I and Q signals according to the first embodiment, and Fig. 9 is a view illustrating a signal state in which the states of the I and Q signals of Fig. 8 have been compensated for.

Referring to Fig. 8, since the states of an I signal A1 and a Q signal A2 are synchronized with a phase difference of 90 degrees, the voltage levels G1 and G2 of the two signals A1 and A2 are balanced during a data section D1. Therefore, the states of the I signal and the Q signal in the data section D1 are corrected to states that can be accurately recovered.

Fig. 9 illustrates states in which an I signal and a Q signal have been compensated for. A horizontal axis represents a gain level (V) in the horizontal direction around zero, and a vertical axis represents a gain level in the vertical direction around zero. The states of I signals and Q signals having phases of 0°, 270°, 180°, and 90°are displayed on a quadrant 1, a quadrant 2, a quadrant 3, and a quadrant 4, respectively. At this point, the states of I signals and Q signals displayed with different symbols have the same interval and are concentrated on four regions for each channel. A signal for each channel has the same recognition distance, a synchronized phase, and a time standard.

The above-described first embodiment can reassign a channel frequency to communicate with the tag device through a stable channel when the state of a signal of the tag device is unstable. Also, the first embodiment can exclude crosstalk between channels and improve a distance limitation to the tag device, reception sensitivity, and a recognition rate.

First example

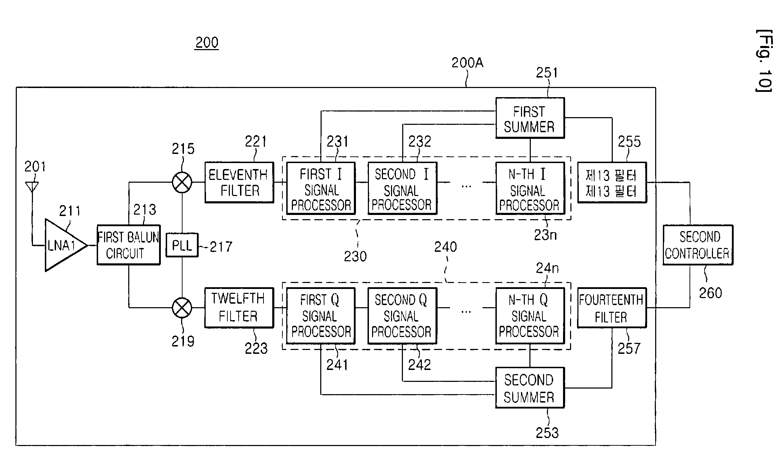

Figs. 10 to 13 illustrate a first example embodiment:

Referring to Fig. 10, a wireless communication receiver 200 comprises a receiver in a wireless communication system and can be applied to a wireless short distance communication band, for example, a reader device, a tag device, and a Zigbee node.

The receiver 200 comprises a second reception circuit 200A and a second controller 260. The second reception circuit 200A can stably recover a received signal regardless of an environment where the phase and the energy delivery position of a signal change.

For this purpose, the second reception circuit 200A comprises a reception antenna 201, a first low noise amplifier (LNA) 211, a first balun circuit 213, a seventh mixer 215, a phase synchronizer 217, an eighth mixer 219, an eleventh filter 221, a twelfth filter 223, an I signal processor 230, a Q signal processor 240, a first summer 251, a second summer 253, a thirteen filter 255, and a fourteenth filter 257.

The LNA 211 amplifies a desired signal factor and minimizes the noise of the signal received from the reception antenna 201. The LNA 211 excludes a noise component and amplifies signals in a desired band according to an adjacent channel power ratio (ACPR) standard regulation, for example. Here, the first balun circuit 213 separates an RF signal delivered from the first LNA 211 into an I signal (ex. Esin ωt) and a Q signal (Ecos ωt). For example, the first balun circuit 213 separates a signal RF signal into a signal having a phase of 0° and a signal having a phase of 90°.

In the first balun circuit 213, balun is an abbreviation of balance-unbalance. The balun circuit 213 converts a balanced signal into an unbalance signal and vice versa.

The first balun circuit 213 outputs an RF I signal to the seventh mixer 215 and outputs an RF Q signal to the eighth mixer 219. The seventh mixer 215 converts the RF I signal into a baseband I signal using a first local frequency. The eighth mixer 219 converts the RF Q signal into a baseband Q signal using a second local frequency. Here, the ACPR defines linearity of a power amplification operation.

The first local frequency and the second local frequency can have the same phase or have a different phase by 90°.

The phase synchronizer 217 comprises a VCO and PLL, and supplies the first and second local frequencies required for synthesis of the baseband I signal and the baseband Q signal to the seventh mixer 215 and the eighth mixer 219.

The eleventh filter 221 removes a noise signal generated during the synthesis operation of the baseband I signal and the first local frequency, and the twelfth filter 223 removes a noise signal generated during the synthesis operation of the baseband Q signal and the second local frequency.

The I signal processor 230 processes the baseband I signal output from the eleventh filter 221 to output a positive square wave. The Q signal processor 240 processes the baseband Q signal output from the twelfth filter 223 to output a negative square wave.

The I signal processor 230 comprises a plurality of I signal processors 231-23n. The plurality of I signal processors 231-23n are sequentially connected. Each of the I signal processors 231-23n amplifies a signal at a predetermined gain, cuts the amplified signal to a predetermined voltage, and removes the negative component of the cut signal to output a signal of a positive component.

The Q signal processor 240 comprises a plurality of Q signal processors 241-24n. The plurality of Q signal processors 241-24n are sequentially connected. Each of the Q signal processors 241-24n amplifies a signal at a predetermined gain, cuts the am plified signal to a predetermined voltage, and removes the positive component of the cut signal to output a signal of a negative component.

The first summer 251 sums output signals from the plurality of I signal processors 231-23n to output the same, and the second summer 253 sums output signals from the plurality of Q signals processor 241-24n to output the same.

The thirteenth filter 255 removes a noise mixed in the I signal output from the first summer 251, and the fourteenth filter 257 removes a noise mixed in the Q signal output from the second summer 253. That is, the thirteenth filter 255 and the fourteenth filter 257 remove a noise component mixed during the signal summing operation.

Here, the I signal processor 230 (231-23n) and the first summer 251 serve as an analog-to-digital converter recovering an I signal into a digital signal. The Q signal processor 240 (241-24n) and the second summer 253 serve as an analog-to-digital converter recovering a baseband Q signal into a digital signal. The number of the I signal processors 231-23n and the Q signal processor 241-24n can be 5 to 10. That is, n=5-10.

The second controller 260 receives a digital I signal and a digital Q signal from the first summer 251 and the second summer 253, and synchronizes the two digital signals to analyze the signals.

Also, the second controller 260 receives a digital I signal of a square wave and a digital Q signal of a square wave to analyze the information of the tag device. The second controller 260 has a communication protocol to control RFID communication, analyzes a code of the analyzed received signal, and generates a transmission signal as a result of the analysis result.

Also, since the second controller 260 receives a digital I signal and a digital Q signal processed in the form of a square wave, it can accurately recover a signal of the tag device regardless of a phase change. Also, the second controller 260 can minimize the characteristic change of a DC offset that can be generated depending on the DC level of the digital I/Q signal.

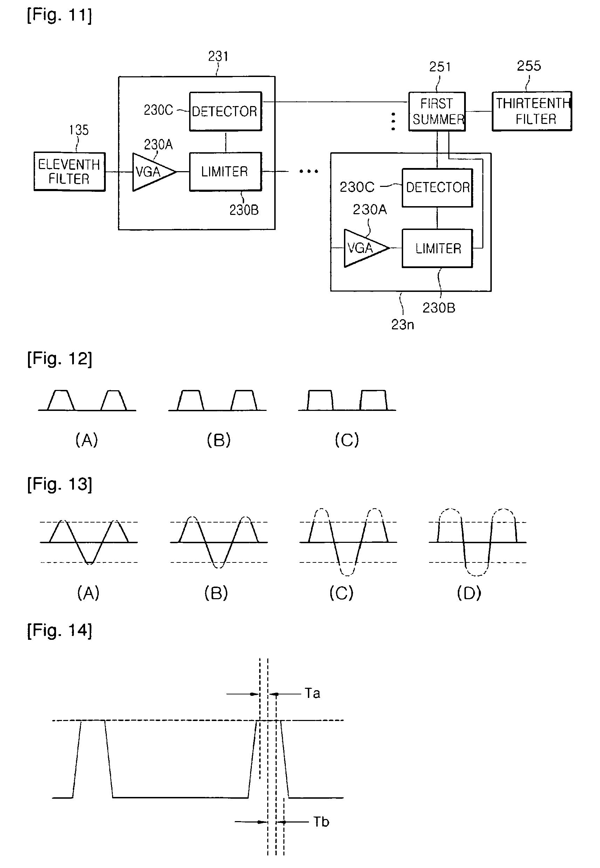

Fig. 11 is a view illustrating a I signal processor according to the first example. Here, since the I signal processor 230 and the Q signal processor 240 are different in a signal processing object and are the same in a basic construction and operation and process a signal in the same sequence, description of the Q signal processor 240 is omitted.

Referring to Fig. 11, each of the plurality of I signal processors 231-23n comprises a voltage gain amplifier (VGA) 230A, a limiter 230B, and a detector 230C.

The VGA 230A amplifies a baseband I signal to a predetermined gain. The input terminal of the limiter 230B is connected to the output terminal of the VGA 230A, and cuts the signal amplified by the VGA 230A using a predetermined DC level. Here, the VGA 230A can amplify a signal using an amplification gain of about 10 dB, and the limiter 230B can set the cut DC level to a voltage of about a positive 1 V, or set levels increased by 1 V (ex. 1 V, 2V,..., nV) as cutting levels, but is not limited thereto.

The limiter 230B can be roughly realized in three parts. That is, the limiter 230B comprises a circuit for maintaining the power of an analog signal having a DC component in a stable range such that it is not influenced by outside interference, a compensation circuit for controlling an analog swing voltage up/down, and a limiting circuit for determining a signal range that is not to be cut, and cutting the rest of a signal.

The detector 230C is connected to the output terminal of the limiter 230B in the form of coupling, and detects an output signal of the limiter 230B to output the same to the first summer 251. At this point, the detector 230C outputs a positive component, and removes a signal of a negative component. The signal of the negative component means a DC level of a (-) component.

An output signal of the limiter 230B is input to the detector 230C and the VGA of the next I signal processor. An output signal of the detector 230C is input to the first summer 251. The operation of amplifying and cutting a signal is repeated in this sequence up to the n-th I signal processor 23n.

The n-th I signal processor 23n receives an output signal of the (n-1)th limiter to amplify the signal using a predetermined gain. The amplified signal is cut by the limiter 230B, and output to the detector 230C. The detector 230C outputs a positive component to the first summer 251. Therefore, the first summer 251 receives output signals of the detector 230C of the n I signal processors 231-23n to sum the signals and output the summed signal.

At this point, since the summed signal is obtained by processing baseband I signals, the signal is output in the form of a positive square wave.

The Q signal processor and the second summer operate in the same sequence as in the I signal processor 230 and the first summer 251. Since the summed signal is obtained by processing baseband Q signals, the signal is output in the form of a negative square wave.

Fig. 12 is a view of a signal waveform processed by the detector of Fig. 11, and Fig. 13 is a view of a signal waveform processed by the limiter of Fig. 11.

Referring to Figs. 11 and 12, Figs. 12A, 12B, and 12C illustrate waveforms of an I signal amplified by the VGAs 230A of three signal processors and cut by the limiters 230B, the waveforms being detected by respective detectors 230C. That is, here, the VGA 230A amplifies a signal using a gain of 10 dB, and the limiter 230B cuts the amplified signal at a voltage increased by positive DC 1 V, and the above operations are repeated, so that a baseband I signal detected by the detector 230C approaches close to a digital signal waveform, i.e., a positive square wave.

Referring to Fig. 11 and 13, Figs. 13A to 13D illustrate the output waveforms of the limiters 230B of four I signal processors. A baseband I signal is amplified by the VGA 230A of each I signal processor, and the upper/lower portions of the amplified signal are cut by each limiter 230B and then output.

Referring to Figs. 11 to 13, the first summer 251 receives detection signals from the plurality of detectors 230C, and sums the received detection signals to recover a digital I signal suitable for an RFID signal standard. Also, A digital Q signal can be recovered using the above-described method of generating the digital I signal.

Fig. 14 is a view of a signal waveform output by the first summer of Fig. 11.

Referring to Figs. 11 and 14, an output waveform of the first summer of Fig. 14 is obtained by summing baseband I signals processed by the respective signal processors. For accurate analysis, the second controller performs position correction on the sections of the digital I signals output from the first summer to analyze the signals. That is, the second controller analyzes a section Tb as a section 1 of the digital I signal using a point past a section Ta as a reference from a point at which the rising section of the digital I signal ends. Accordingly, the second controller can always analyze a voltage (nV, n is the number of the signal processors) obtained by summing cut signals as 1.

Also, the second controller can accurately recover a digital Q signal through position correction of a digital Q signal in the same method as in the digital I signal. Since the digital I signal and the digital Q signal contain the same reader information and tag information, the second controller synchronizes the two signals to perform analysis.

This receiver can minimize reduction in reception sensitivity and an SNR in the case where a counterpart device uses an ASK modulation method, and recover a digital signal to a sufficient voltage level. Also, since the receiver can increase an amplification gain without signal distortion, a recognition rate is improved and RFID communication can be stably performed. Also, the receiver can minimize an influence of a DC offset through sequential amplification and cutting process, and minimize generation of fading phenomenon by processing two phase signals, respectively, and summing the same. Also, the receiver can exclude an influence of a crosstalk signal by a phase change.

Second example

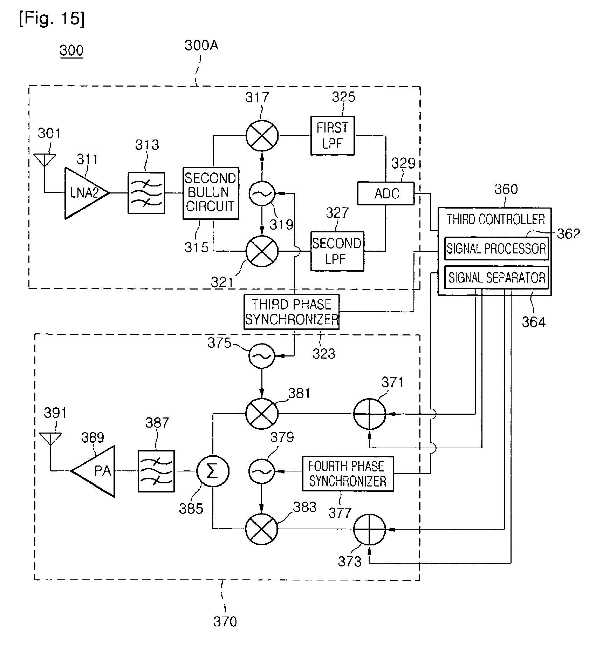

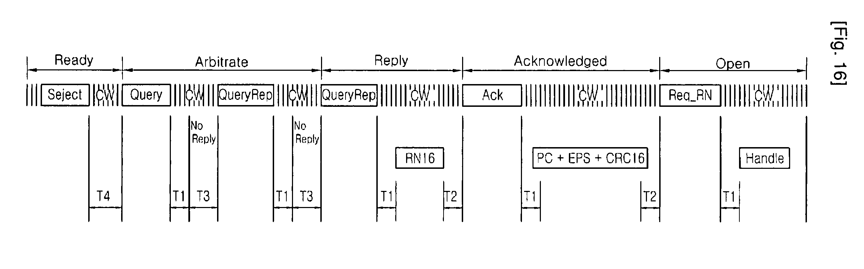

Figs. 15 and 16 illustrate the second example.

Fig. 15 illustrates a transceiver of a wireless communication system according to the second example.

Referring to Fig. 15, the reader device 300 represents a transceiver of an RFID system, for example, and comprises a third reception circuit 300A, a third phase synchronizer 323, a third controller 360, and a third transmission circuit 370.

The third reception circuit 300A comprises a reception antenna 301, a second low noise amplifier (LNA) 311, a second balun circuit 315, a ninth mixer 317, a first oscillator 319, a tenth mixer 321, a first low pass filter (LPF) 325, a second LPF 327, and an ADC 329.

The second LNA 311 amplifies a desired signal factor and minimizes the noise of the signal received through the reception antenna 301, a reception filter 313 filters signals in a RFID reception band from signals amplified by the second LNA 311, and the second balun circuit 315 separates received signals that have passed through the reception filter 313 into RF I signals and RF Q signals having a phase difference of 90°with respect to each other.

The ninth mixer 317 converts an RF I signal into a baseband I signal using a first local frequency input from the first oscillator 319, and the tenth mixer 321 converts an RF Q signal into a baseband Q signal using a second local frequency input from the first oscillator 319.

The first LPF 325 removes a noise generated during the mixing operation from the baseband I signal, and the second LPF 327 removes a noise generated during the mixing operation from the baseband Q signal.

The ADC 329 converts at least one of the baseband I signal output from the first LPF 325 and the baseband Q signal output from the second LPF 327 into a digital signal to output the same to the third controller 360.

The third controller 360 comprises a signal processor 362 and a signal separator 364, and controls the operations of the third phase synchronizer 323 and a fourth phase synchronizer 377, and respective parts.

The third controller 360 controls the third transmission circuit 370. At this point, the third controller 360 transmits a control signal for controlling the phase of an RF signal and selection timing according to a PIE format. For the PIE format, a format according to an UHF RFID protocol such as ISO 18000-A, ISO 18000-B, EPC Generation-0, EPC Generation-1, and EPC Generation-2, can be applied. In the third embodiment, an EPC Generation-2 protocol is used. As this modulation standard is applied, all of Double SideBand-Amplitude Shift Keying (DSB-ASK), Single SideBand-Amplitude Shift Keying (SSB-ASK), and Phase Reversal-Amplitude Shift Keying (PR-ASK) can be used.

The signal processor 362 of the third controller 360 processes a transmitted/received signal according to a linking timing standard of a reader device and a tag device defined by EPC Generation-2 UHF RFID protocol.

The signal separator 364 separates a signal processed by the signal processor 362 into a tag signal section and a reader signal section. A partial frequency signal of the tag signal section is delivered to the first summer 371 of the transmission circuit 370, and the frequency signal of the reader signal section is delivered to the second summer 373.

The third transmission circuit 370 comprises a first summer 371, a second summer 373, a second oscillator 375, a third oscillator 379, an eleventh mixer 381, a twelfth mixer 383, a synthesizer 385, a transmission filter 387, a power amplifier 389, and a transmission antenna 391.

The first summer 371 sums an I signal and a Q signal having a phase difference of 90°which are partial frequency signals of the tag signal section to output a single signal, and the second summer 373 sums an I signal and a Q signal having a phase difference of 90°which are partial frequency signals of the reader signal section to output a single signal.

Here, the second oscillator 375 generates a third local frequency using a reference signal of the third phase synchronizer 323 to output the third local frequency to the eleventh mixer 381, and the third oscillator 379 generates a fourth local frequency using a reference signal of the fourth phase synchronizer 377 to output the fourth local frequency to the twelfth mixer 383.

The eleventh mixer 381 mixes the third local frequency supplied from the second oscillator 375, which is used as a carries, with a signal delivered from the first summer 371 to generate an energy signal.

The twelfth mixer 383 mixes the fourth local frequency supplied from the third oscillator 379, which is used as a carrier, with a signal delivered from the second summer 373 to generate a data signal.

Here, the third local frequency is controlled by the reference signal of the third phase synthesizer 323. The third local frequency is a signal in Industrial, Scientific and Medical (ISM) band. The fourth local frequency is controlled by the reference signal of the fourth phase synthesizer 377. The fourth local frequency is a signal in a UHF band. The third phase synchronizer 323 and the fourth phase synchronizer 377 generate the reference signals, respectively, in response to a control signal of the third controller 360. The reference signals of the third phase synchronizer 323 and the fourth phase synchronizer 377 are phase synchronization signals for stably maintaining the third and fourth local frequencies, which are oscillation frequencies, without fluctuation.

Since an energy signal output from the eleventh mixer 381 and a data signal output from the twelfth mixer 383 belong to frequency bands different from each other, respectively, and are synchronized in different sections according to a timing standard, a crosstalk phenomenon, a data interpretation error, a DC offset, and a double modulation/demodulation can be excluded.

The synthesizer 385 synthesizes an energy signal output from the eleventh mixer 381 and a data signal output from the twelfth mixer 383 into one signal according to a timing standard. The synthesized signal passes through the transmission filter 387 and the power amplifier 389 and is transmitted through the transmission antenna 391.

The transmission filter 387 passes a signal in a transmission band and removes a noise component generated by the synthesizer during the synthesis operation. The power amplifier 389 amplifies a transmission signal to a power level that allows transmission.

Fig. 16 is a view illustrating a timing standard of an EPC Generation-2 standard applied to the reader device according to the third embodiment.

Referring to Fig. 16, a timing diagram of the reader device operation is illustrated in the upper section of the drawing, and a timing diagram of the tag device operation is illustrated in the lower section of the drawing.

The linking timing sections of the reader device and the tag device comprise sections of a ready state, an arbitrate state, a reply state, an acknowledged state, and an open state.

The ready state section comprises a select command section and a continuous wave (CW) section. The arbitrate state section comprises a query command, a CW section, a QueryRep command, and a CW section. The reply state section comprises a QueryRep command and a CW section. The acknowledged state section comprises an Ack command and a CW section. The open state section comprises a Req_RN command and a CW section.

A signal output from the reader device operation section operates in at least one state of a select command, a Query command, a QueryRep command, an ACK command, and Req_RN command depending on a command kind. A CW section corresponding to the tag device operation exists between respective commands.

The CW section can be divided into four kinds of time intervals, that is, a first time interval T1, a second time interval T2, a third time interval T3, and a fourth time interval T4. The first to fourth time intervals T1-T4 are frequencies output during the tag device operation section.

The tag device operation section is processed during a CW section, and operates in at least one CW section of the four kinds of time intervals T1-T4. Also, the CW section comprises operations such as 16-bit random or pseudo-random number (RN16), Protocol Control (PC) bits, Electronic Product Code(EPC) bits, Cyclic Redundancy Check (CRC16) bits, and Handle data.

The respective sections and commands are described are described below in detail.

The ready state means a state where the tag device can communicate without losing energy. When tag energy is consumed, the tag device can be restored to the ready state. A select command for the ready state is a command for selecting the tag device to be added to or deleted from a communication inventory. The fourth time interval T4 of the ready state means a minimum interval secured between reader commands.

The arbitrate state is a state where the tag device and the reader device perform a connection procedure together with a tag response not made. A Query command of the arbitrate state is a command for transmitting a response request signal to the tag device selected as a communication object. The first time interval T1 of the arbitrate state means a time at which communication authority is transferred from the reader device to the tag device, which can be judged using whether a signal has been received from the tag antenna. The first time interval T1 can exist in each state interval. The third time interval T3 of the arbitrate state means a standby time of the reader device in response to a response request signal. A QueryRep command of the arbitrate state is a command reducing a reader slot value when there is no reply, and retransmitting a response request signal.

The reply state is a state where the tag device transmits a response code to the reader device. The second time interval T2 of the reply state means a time secured for the tag device to demodulate a signal of the reader device. 16-bit random or pseudo-random number (RN16) of the replay state means a response code of the tag device.

The acknowledged state is a state where as a response code of the tag device is transmitted, the reader device transmits the response code and tag information is transmitted. An ACK command of the acknowledged state means a acknowledge code with respect to the tag response. The protocol control (PC) bits of the acknowledged state is information regarding a physical layer of the tag information, and the EPC bits are the tag information for identification. Also, the CRC 16 is error detection information.

The open state is a state where a series of commands and responses for delivery of the tag information are processed after tag recognition. A Req_RN command of the open state is a command transmitted to the tag device to request new RN16. The Handle command of the open state is a state where a new command/response structure is processed after a Req_RN command. The new command/response structure can comprise all structures corresponding to the above-described plurality of states.

Also, besides the above section states, a timing standard according to an EPC protocol can comprise more various time sections.

Referring to Figs. 15 and 16, a signal transmitted in the first time interval T1 to fourth time interval T4 is a signal in a tag operation section, and represents a partial frequency signal in the tag operation section output from the signal separator 364 of the third controller 360. Signals corresponding to the first time interval T1 to the fourth time interval T4 are I and Q signals having a phase difference of 90°, which are summed as a single signal at the first summer 371. The single signal is mixed with the third local frequency by the eleventh mixer 381 and generated as an energy signal.

Also, the reader operation section comprises a state where a select command, a Query command, a QueryRep command, an ACK command, and Req_RN command are processed.

Also, signals in the reader signal section are I and Q signals having a phase difference of 90°, which are summed as a single signal at the second summer 373. The single signal is mixed with the fourth local frequency at the twelfth mixer 383 and generated as a data signal.

Here, the third local frequency signal is a signal in an industrial scientific and medical (ISM) band, and the fourth local frequency signal is a signal in a UHF band.

Therefore, since the energy signal and the data signal have a different frequency band and synchronized in a different section according to the timing standard, phenomena such as crosstalk, a data interpretation error, a DC offset, and double modulation/demodulation can be excluded.

Also, since a coding operation is performed using a signal in an UHF band and a signal in an ISM band simultaneously, energy can be stably supplied to the tag device, information of the tag device can be stably received, and a characteristic influence of a DC offset that may be generated according to a DC level can be minimized.

Meanwhile, in an embodiment, a wireless communication device described using the reader device disclosed in the first to third embodiments can be applied to the tag device of an RFID system, and is not limited to the reader device. Also, the transmission circuit and the reception circuit disclosed in each embodiment can serve as the transmission circuit and the reception circuit of another embodiment and are not limited to the embodiment.

Although embodiments have been described with reference to a number of illustrative embodiments thereof, it should be understood that numerous other modifications and embodiments can be devised by those skilled in the art that will fall within the scope of the principles of this disclosure as defined by the claims. For example, elements specifically described in the embodiments can be modified, and differences associated with these modifications and applications should be construed as being comprised in the scope of the present disclosure as defined by appended claims.

### Industrial Applicability

Embodiments can reduce crosstalk between channels.

Embodiments can improve a signal recognition distance with a tag device and a tag signal recognition rate.

Embodiments can improve a degree of freedom in arrangement of a reader device.

Embodiments can prevent a non-linear crosstalk signal by a peak-to-average power ratio (PAR).

Embodiments can prevent an increase in an SNR.

Embodiments can prevent reception sensitivity and an SNR from reducing in the case where a tag device uses an ASK modulation method, and recover a digital signal to a sufficient voltage level.

Embodiments can improve an amplification gain without distortion of a signal received from a tag device to perform stable RFID communication.

Embodiments can minimize an influence of a DC offset through sequential amplification and cutting of a received tag signal.

Embodiments can minimize generation of a fading phenomenon.

Embodiments can exclude an influence of a crosstalk signal caused by a change in the phase of a received signal.

Embodiments can swiftly supply energy to a tag device.

## Claims

1. A wireless communication device comprising:
- a reception signal processor (120) demodulating a received signal;
- a transmission signal processor (180) modulating a transmission signal;
**characterized in that** the communication device comprises:
- a first signal state detector (130) detecting a reception state of a first signal from the received signal;
- a second signal state detector (140) detecting a reception state of a second signal from the received signal; and
- a controller (160) controlling a change of a frequency of a channel transmitted to the transmission signal processor (180) depending on a reception state of at least one of the first signal of the first signal state detector (130) and the second signal of the second signal state detector (140),
wherein the first signal comprises an I signal, and the second signal comprises a Q signal, and wherein the controller (160) analyzes at least one of a voltage level, signal power, a signal phase, a recognition distance to a tag device, and whether crosstalk between channel signals occurs using the reception states input from the first signal state detector (130) and the second signal state detector (140), to control the change of frequency.

2. The apparatus according to claim 1, comprising:
- a reception signal power controller (110) controlling power of a signal received from a reception antenna; and
- a first switch unit (118) outputting an output signal of the reception signal power controller (110) to at least one of the reception signal processor (120), the first signal state detector (130), and the second signal state detector (140).

3. The apparatus according to claim 1, comprising:
- a phase synchronizer (172) generating a local frequency signal in response to a control signal of the controller (160); and
- a first phase shifter (176) supplying the local frequency signal of the phase synchronizer (172) as a first local frequency signal of the same phase to the first signal state detector (130), and supplying a second local frequency signal of a quadrature phase to the second signal state detector (140).

4. The apparatus according to claim 3, wherein the first signal state detector (130) comprises:
- a first mixer (132) mixing the received signal with the first local frequency signal of the same phase to output a baseband first signal;
- a first amplifier (134) amplifying the baseband first signal under control of the controller (160); and
- a first attenuator (135) attenuating the baseband first signal under control of the controller (160).

5. The apparatus according to claim 3, wherein the second signal state detector (140) comprises:
- a second mixer (142) mixing the received signal with the second local frequency signal of the quadrature phase to output a baseband second signal;
- a second amplifier (144) amplifying the baseband second signal under control of the controller (160); and
- a second attenuator (145) attenuating the baseband second signal under control of the controller (160).

6. The apparatus according to claim 1, comprising a second switch unit (150) selectively outputting states of the first signal and the second signal detected by the first signal state detector (130) and the second signal state detector (140) to the controller (160).

7. The apparatus according to claim 1, wherein the controller (160) comprises:
- a reception state analysis module (164) analyzing a state of at least one of the first signal of the first signal state detector (130) and the second signal of the second signal state detector (140) to output control information; and
- a channel multiplexing module (161) changing a frequency of a transmission channel and multiplexing the channel using the control information of the reception state analysis module (164).

8. The apparatus according to claim 7, wherein the controller (160) comprises:
- a phase control module (163) controlling a phase of a transmission signal in response to the control information of the reception state analysis module (165);
- a phase-locked loop (PLL) control module (162) outputting a control signal to generate a plurality of local frequencies for a channel frequency changed by the channel multiplexing module (161); and
- a reception sensitivity control module (165) controlling reception sensitivities of the first signal state detector (130) and the second signal state detector (140).

## Patentansprüche

1. Drahtlose Kommunikationsvorrichtung, umfassend:
- einen Empfangssignalprozessor (120), der ein empfangenes Signal demoduliert;
- einen Sendesignalprozessor (180), der ein Sendesignal moduliert;
**dadurch gekennzeichnet, dass** die Kommunikationsvorrichtung umfasst:
- einen ersten Signalzustandsdetektor (130), der einen Empfangszustand eines ersten Signals des empfangenen Signals detektiert;
- einen zweiten Signalzustandsdetektor (140), der einen Empfangszustand eines zweiten Signals des empfangenen Signals detektiert; und
- eine Steuerung (160), die eine Frequenzänderung eines Kanals, welcher zum Sendesignalprozessor (180) übertragen wird, abhängig von einem Empfangszustand wenigstens eines des ersten Signals des ersten Signalzustandsdetektors (130) und des zweiten Signalzustandsdetektors (140) steuert, wobei
das erste Signal ein I Signal umfasst und das zweite Signal ein Q Signal umfasst und wobei die Steuerung (160) mindestens eines von einem Spannungspegel, einer Signalleistung, einer Signal-Phase, eines Erkennungsabstands zu einem Bezeichnungsgerät und ob Nebensignaleffekte zwischen Kanalsignalen auftreten, analysiert und die Empfangszustände, welche vom ersten Signalzustandsdetektor (130) und vom zweiten Signalzustandsdetektor (140) eingegeben werden, nutzt, um die Frequenzänderung zu steuern.

2. Vorrichtung nach Anspruch 1, umfassend:
- eine Empfangssignalleistungssteuerung (110) zur Leistungssteuerung eines von der Empfangsantenne empfangenen Signals; und
- eine erste Schalteinheit (118) zur Ausgabe eines Ausgabesignals der Empfangssignalleistungssteuerung (110) an wenigstens den Empfangssignalprozessor (120), oder den ersten Signalzustandsdetektor (130) oder den zweiten Signalzustandsdetektor (140).

3. Vorrichtung nach Anspruch 1, umfassend:
- einen Phasensynchronisator (172), der ein lokales Frequenzsignal als Antwort auf ein Steuersignal der Steuerung (160) generiert; und
- einen ersten Phasenschieber (176), der das lokale Frequenzsignal des Phasensynchronisators (172) als erstes lokales Frequenzsignal derselben Phase dem ersten Signalzustandsdetektor (130) zuführt und der ein zweites lokales Frequenzsignal einer Quadratur-Phase dem zweiten Signalzustandsdetektor (140) zuführt.

4. Vorrichtung nach Anspruch 3, wobei der erste Signalzustandsdetektor (130) umfasst:
- einen ersten Mischer (132), der das empfangene Signal mit dem ersten lokalen Frequenzsignal derselben Phase mischt, um ein erstes Basisband Signal auszugeben.
- einen ersten Verstärker (134), der das erste Basisband Signal verstärkt, unter Kontrolle der Steuerung (160); und
- einen ersten Dämpfer (135), der das erste Basisband Signal dämpft, unter Kontrolle der Steuerung (160).

5. Vorrichtung nach Anspruch 3, wobei der zweite Signalzustandsdetektor (140) umfasst:
- einen zweiten Mischer (142), der das empfangene Signal mit dem zweiten lokalen Frequenzsignal der Quadratur-Phase mischt, um ein zweites Basisband Signal auszugeben;
- einen zweiten Verstärker (144), der das zweite Basisband Signal verstärkt, unter Kontrolle der Steuerung (160); und
- einen zweiten Dämpfer (145), der das zweite Basisband Signal dämpft, unter Kontrolle der Steuerung (160).

6. Vorrichtung nach Anspruch 1, umfassend eine zweite Schalteinheit (150), die selektiv die Zustände des ersten Signals und des zweiten Signals, welche von dem ersten Signalzustandsdetektor (130) und dem zweiten Signalzustandsdetektor (140) detektiert werden, an die Steuerung (160) ausgibt.

7. Vorrichtung nach Anspruch 1, wobei die Steuerung (160) umfasst:
- ein Empfangszustandsanalysemodul (164), welches den Zustand wenigstens eines ersten Signals des ersten Signalzustandsdetektors (130) oder des zweiten Signals des zweiten Signalzustandsdetektors (140) analysiert, um Kontrollinformationen auszugeben; und
- ein Kanalbündelungsmodul (161), welches eine Frequenz eines Übertragungskanals ändert und den Kanal durch Nutzen der Kontrollinformationen des Empfangszustandsanalysemoduls (164) bündelt.

8. Vorrichtung nach Anspruch 7, wobei die Steuerung (160) umfasst:
- ein Phasensteuermodul (163), das eine Phase eines Sendesignals als Antwort auf die Kontrollinformationen des Empfangszustandsanalysemoduls (165) steuert;
- ein Phasenregelkreis (PLL) Steuerungsmodul (162), das ein Steuersignal ausgibt, um eine Vielzahl von lokalen Frequenzen für eine Kanalfrequenz, die vom Kanalbündelungsmodul (161) geändert wird, zu generieren; und
- ein Empfangsempfindlichkeitssteuermodul (165), das die Emfangsempfindlichkeiten des ersten Signalzustandsdetektors (130) und des zweiten Signalzustandsdetektors (140) steuert.

## Revendications

1. Dispositif de communication sans fil comprenant:
- un processeur de signal de réception (120) qui démodule un signal reçu;
- un processeur de signal de transmission (180) qui module un signal de transmission;
**caractérisé en ce que** le dispositif de communication comprend:
- un premier détecteur d'état du signal (130) qui détecte un état de réception d'un premier signal à partir du signal reçu;
- un second détecteur d'état du signal (140) qui détecte un état de réception d'un second signal à partir du signal reçu; et
- un dispositif de commande (160) qui commande une modification d'une fréquence d'un canal transmis au processeur du signal de transmission (180) en fonction d'un état de réception d'au moins l'un parmi le premier signal du premier détecteur d'état du signal (130) et du second signal du second détecteur d'état du signal (140),
dans lequel le premier signal comprend un signal I, et le second signal comprend un signal Q, et dans lequel le dispositif de commande (160) analyse au moins l'un parmi le niveau de tension, la puissance du signal, une phase de signal, une distance de reconnaissance jusqu'à un dispositif de repérage, et si une interférence entre les signaux de canal se produit en utilisant les états de réception entrés en provenance du premier détecteur d'état du signal (130) et du second détecteur d'état du signal (140) afin de commander la modification de la fréquence.

2. Appareil selon la revendication 1, comprenant:
- un dispositif de commande de la puissance du signal de réception (110) qui commande la puissance d'un signal reçu d'une antenne de réception; et
- une première unité de commutation (118) qui envoie un signal de sortie du dispositif de commande de puissance du signal de réception (110) vers au moins l'un parmi le processeur du signal de réception (120), le premier détecteur d'état du signal (130), et le second détecteur d'état du signal (140).

3. Appareil selon la revendication 1, qui comprend:
- un synchroniseur de phase (172) qui génère un signal en fréquence locale en réponse à un signal de commande du dispositif de commande (160); et
- un premier déphaseur (176) qui fournit le signal en fréquence locale du synchroniseur de phase (172) comme premier signal en fréquence locale de la même phase au premier détecteur d'état du signal (130), et qui fournit un second signal en fréquence locale d'une phase en quadrature au second détecteur d'état du signal (140).

4. Appareil selon la revendication 3, dans lequel le premier détecteur d'état du signal (130) comprend:
- un premier mélangeur (132) qui mélange le signal reçu avec le premier signal en fréquence locale de la même phase pour envoyer un premier signal en bande de base;
- un premier amplificateur (134) qui amplifie le premier signal en bande de base sous la commande du dispositif de commande (160); et
- un premier atténuateur (135) qui atténue le premier signal en bande de base sous la commande du dispositif de commande (160).

5. Appareil selon la revendication 3, dans lequel le second détecteur d'état du signal (140) comprend:
- un second mélangeur (142) qui mélange le signal reçu avec le second signal en fréquence locale de phase en quadrature pour envoyer un second signal en bande de base;
- un second amplificateur (144) qui amplifie le second signal en bande de base sous la commande du dispositif de commande (160); et
- un second atténuateur (145) qui atténue le second signal en bande de base sous la commande du dispositif de commande (160).

6. Appareil selon la revendication 1, comprenant une seconde unité de commutation (150) qui envoie, de manière sélective, les états du premier signal et du second signal détectés par le premier détecteur d'état du signal (130) et le second détecteur d'état du signal (140) au dispositif de commande (160).

7. Appareil selon la revendication 1, dans lequel le dispositif de commande (160) comprend:
- un module d'analyse de l'état de réception (164) qui analyse un état d'au moins l'un du premier signal du premier détecteur d'état du signal (130) et du second signal du second détecteur d'état du signal (140) pour envoyer les informations de commande; et
- un module de multiplexage de canaux (161) qui modifie une fréquence d'un canal de transmission et multiplexe le canal utilisant les informations de commande du module d'analyse de l'état de réception (164).

8. Appareil selon la revendication 7, dans lequel le dispositif de commande (160) comprend:
- un module de réglage de phase (163) qui règle une phase d'un signal de transmission en réponse aux informations de réglage du module d'analyse de l'état de réception (165);
- un module de commande (162) à verrouillage de phase (PLL) qui envoie un signal de commande permettant de générer une pluralité de fréquences locales pour une fréquence de canal modifiée par le module de multiplexage des canaux (161); et
- un module de commande de sensibilité de réception (165) qui commande les sensibilités de réception du premier détecteur d'état du signal (130) et du second détecteur d'état du signal (140).
